# NEUE EUROPÄISCHE PATENTSCHRIFT

(11) **EP 0 461 383 B2**
(45) Veröffentlichungstag und Bekanntmachung des Hinweises auf die Entscheidung über den Einspruch: **02.05.2001**
(45) Hinweis auf die Patenterteilung: 03.08.1994
(21) Anmeldenummer: 91107194.2
(22) Anmeldetag: 03.05.1991
(51) Int. Cl.: B01J 3/03, F16J 13/00, B01L 3/04

(54) **Probenbehälter zum Aufschliessen bzw. Analysieren von Probenmaterial**
Sample container for the decomposition or analysis of samples
Récipient à échantillons pour la décomposition ou l'analyse d'un échantillon

(30) Priorität: 13.06.1990 DE 4018955
(43) Veröffentlichungstag der Anmeldung: 18.12.1991
(73) Patentinhaber: MLS GMBH, D-88299 Leutkirch (DE)
(72) Erfinder: Lautenschläger, Werner, W-7970 Leutkirch (DE)
(74) Vertreter: Schmidt-Evers, Jürgen, Dipl.-Ing.

(56) Entgegenhaltungen:
- DE-A- 2 706 723
- DE-A- 3 620 381
- DE-A- 3 839 901
- FR-A- 2 642 218
- US-A- 4 882 128
- H.Feuerbacher et al., "Druckaufschluss als Probenvorbereitung", Sonderdruck, 1989, GIT-Verlag, Darmstadt, DE

## Beschreibung

Die Erfindung bezieht sich auf einen Probenbehälter nach dem Oberbegriff des Anspruches 1.

In einem solchen Probenbehälter wird ein oder werden mehrere Materialien gleichzeitig zwecks Aufschluß oder Analysierung der Materialien chemisch behandelt, wobei zur Forcierung dieser chemischen Behandlung Wärme zugeführt werden kann. Ein im Probenbehälter zu untersuchendes Probenmaterial kann beispielsweise Klärschlamm sein, der mit hochaggressiven Säuren aufgeschlossen werden soll. Um den Aufschlußvorgang, d.h. den chemischen Prozeß, zu beschleunigen, ist es üblich, das mit Säuren oder sonstigen Aufschlußmitteln versetzte Probenmaterial zu erhitzen, wobei der Probenbehälter mit dem Probenmaterial und dem Aufschlußmittel in einem Heizgerät erwärmt wird, vorzugsweise in einem Mikrowellenofen einer Mikrowellenstrahlung ausgesetzt wird.

Durch das Erhitzen kann im Probenbehälter ein großer Überdruck entstehen. Um eine Beschädigung oder eine Explosion des Probenbehälters zu verhindern, ist in einer Auslaßöffnung ein Ventil vorgesehen, das bei Überschreitung eines vorbestimmten Innendrucks selbsttätig öffnet.

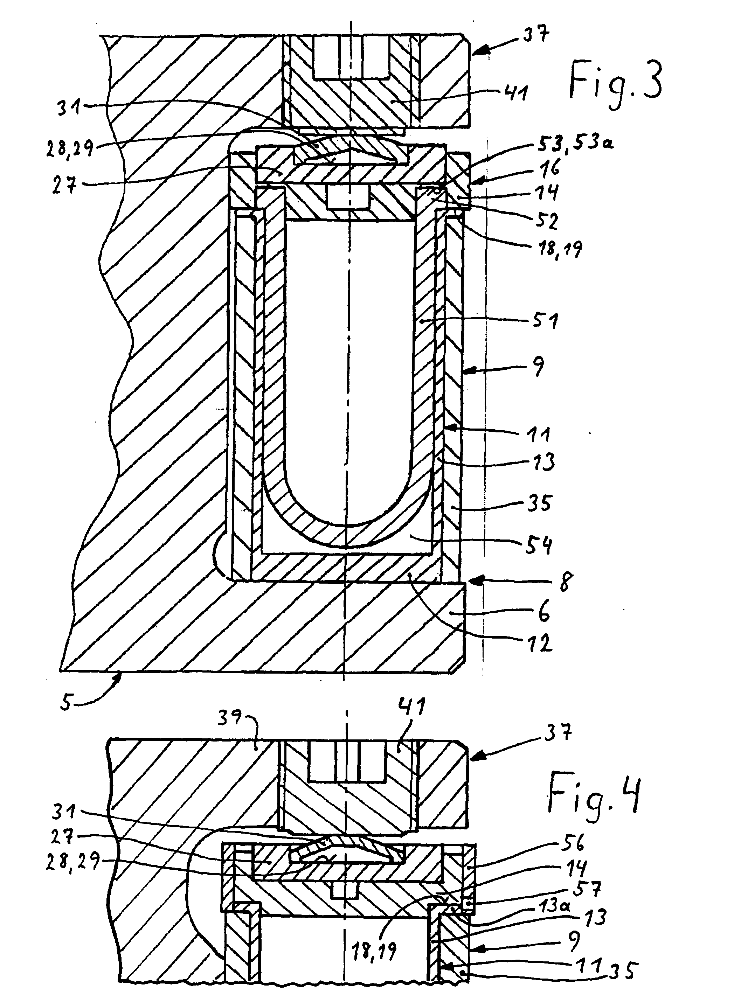

Aus dem Fachbericht "Druckaufschluß als Probenvorbereitung zur Spurenelementbestimmung", veröffentlicht im Sonderdruck 1989, 375-385, GIT VERLAG, Darmstadt, sind mehrere Arten Druckbehälter zu entnehmen, die sich wesentlich voneinander unterscheideen. Bei den unter 2.1 in Verbindung mit Abb. 2 beschriebenen Druckaufschlußbehältem DAB I bis IV besteht jeweils das topfförmige Behälterunterteil (Druckbehälter 1) aus einem Metallzylinder. Zwischen dem Deckel und einem durch einen Bajonett-Schnellverschluß über dem Deckel in den Metallzylinder einsetzbaren Widerlagerteil sind mehrere, ein Federpakte bildende Tellerfedern angeordnet, die den Deckel in seine Schließstellung beaufschlagen. Über das Material der Tellerfedern ist auch in dieser Druckschrift keine Aussage zu entnehmen. Da bereits der Mantelzylinder aus Metall besteht, ist davon auszugehen, daß es sich um übliche Tellerfedern, nämlich solche aus Metall, handelt. Diese bekannten Probenbehälter DAB I bis IV eignen sich nicht für einen Mikrowellenofen.

Dagegen ist in dieser Druckschrift unter 2.5 ein Probenbehälter in der eingangs angegebenen Art als Druckbehälter DAP V ....100 aus massivem PTFE beschrieben, s. Abb. 4. Dieser Probenbehälter ist ohne metallische Teile konstruiert und eignet sich deshalb für einen Mikrowellenofen. Wie sich aus der Beschreibung direkt über der Abb. 4 und aus der Abb. 4 ergibt, ist bei dieser bekannten Ausgestaltung ein Ventil mit einem Ventilsitz und einem damit zusammenwirkenden Ventilglied nicht vorhanden. Es ist lediglich eine durch eine dünne Teflonfolie gebildete Berststelle (Soll-Bruchstelle) vorgesehen, wobei die Teflonfolie als Dichtfolie zwischen dem Gefäß-Unterteil und einem von einer Überwurf-Schraubkappe übergriffenen Anpreß-Deckel angeordnet ist.

In der DE-A-38 39 901 ist ein Probenbehälter Art beschrieben, der ein Behälterunterteil mit einem Deckel aufweist, der als topfförmiger zylindrischer Deckel in auf den Kopf gestellter Position auf das topfförmige zylindrische Behälterunterteil aufschraubbar ist. Bei dieser Ausgestaltung ist das Ventil in einen Ventilkörper integriert, der auf einen auf dem Deckel zentral angeordneten, die Auslaßöffnung enthaltenden Anschlußstutzen aufschraubbar ist. Das Ventil befindet sich in einem den Ventilkörper durchsetzenden Auslaßkanal und umfaßt einen kegelförmigen Ventilsitz, gegen den von oben ein Ventilglied mit einem entsprechenden kegelförmigen Ventilgliedkopf mit einer solchen Vorspannung vorspannbar ist, daß das dem Innendruck des Probenbehälters ausgesetzte Ventilglied bei einem vorbestimmten Innendruck im Behälter vom Ventilsitz nach oben abhebt und die Auslaßöffnung freigibt. Das Ventilglied ist vertikal verschiebbar in einem Zapfen gelagert, der von oben in eine oberseitig offene Ausnehmung des Ventilkörpers einschraubbar ist. Die Vorspannung des Ventilgliedes wird durch ein insbesondere scheibenförmiges Druckstück aus elastischem Material, vorzugsweise aus Silikon, gebildet, das zwischen dem Ventilglied und dem Zapfen angeordnet ist. Der Zapfen läßt sich mittels einem an seinem oberen Ende angeordneten Drehglied im Sinne einer Andruckschraube soweit in den Ventilkörper einschrauben, daß das elastische Druckstück komprimiert und somit die Vorspannkraft erzeugt wird. Durch am Ventilkörper und/oder am Drehglied angebrachte Kennmarken kann die Einschraubtiefe des Zapfens und somit die Vorspannkraft bestimmt werden.

Diese bekannte Ausgestaltung hat sich als funktionstüchtig und brauchbar erwiesen. Sie ist jedoch aufwendig und teuer in der Herstellung, da ein besonderes Ventilgehäuse herzustellen und zu montieren ist. Das auf dem Deckel sitzende Ventilgehäuse beziehungsweise der Ventilkörper vergrößert auch die Bauhöhe des Probenbehälters. Es ist auch das Auf- und Abschrauben des zusätzlichen Ventilgehäuses bzw. Körpers als zeitraubende Handhabung anzusehen. Außerdem sind Gewinde am Behälterunter- und -oberteil teuer und ergeben eine langsame und schwierige Handhabung. Ferner sind dicke Wandungen erforderlich, was zu langen Abkühlzeiten und großem Materialaufwand sowie Gewicht führen. Es ist auch mit einer Beeinträchtigung des Probenbehälters durch Verziehen und Altern insbesondere im Bereich der Gewinde und insbesondere bei längeren Aufschlußzeiten zu rechnen.

Die Erhitzung des Probenmaterials im Probenbehälter erfolgt vorzugsweise in einem Mikrowellenofen, wobei mehrere Probenbehälter gleichzeitig erhitzt werden können. Um dabei eine gleichmäßige Erhitzung zu gewährleisten, ist im Mikrowellenofen ein Drehständer vorzusehen, auf dem die Probenbehälter um eine vertikale Achse gedreht werden können.

Um zum einen den aggressiven Säuren Stand zu erhalten, die beim Aufschließen entstehen können, und zum anderen die Erhitzung durch Mikrowellen zu ermöglichen, bedarf es für den bzw. die Probenbehälter eines chemisch inerten und mikrowellentransparenten Materials. Hierzu eignet sich ein temperaturbeständiger und chemisch inerter Kunststoff sehr gut.

Bei einer aus der DE-B-36 20 381 bekannten Ausgestaltung mit einem topfförmigen Aufnahmeteil und einem scheibenförmigen, auf dem Rand des Aufnahmeteils aufliegenden Deckel wird das Ventilglied durch den Deckel selbst gebildet, wobei auf dem Deckel eine flache Stützscheibe aus Aluminium angeordnet ist. Bei einem auf diese Weise gebildeten Ventil bedarf es zum Aufschließen des in den Probenbehälter eingegebenen Probenmaterials nicht nur eines Ständers im Ofen, sondern auch eines den Probenbehälter übergreifenden Halters, der den das Ventilglied bildenden Deckel in seiner Schließstellung hält. Hierzu ist eine den Probenbehälter unterseitig mit einer Bodenplatte und oberseitig mit einer Halteplatte übergreifende Halterung vorgesehen, wobei in die Halteplatte koaxial zum Probenbehälter eine Andruckschraube von oben einschraubbar ist, deren unteres Ende vertikal gegen die Stützscheibe drückt und somit das Ventil in seiner Verschlußstellung hält. Bei zu großem Innendruck im Probenbehälter kann sich der Deckel geringfügig verformen, wobei er um die Andruckschraube pendelt. Offenbar findet eine schwingenförmige Hochbiegung des Deckels in einem beliebigen Umfangsbereich statt. Ob die Stützscheibe an dieser Bewegung des Deckels teilnimmt oder nicht, ist in der DE-B-36 20 381 nicht beschrieben. Es ist zu vermuten, daß die aus Aluminium bestehende Stützscheibe unter dem erhöhten Innendruck ebenfalls an der jeweiligen Umfangsstelle nach oben ausbiegt, so daß der Deckel dieser Bewegung folgen und der Überdruck in dem so entstehenden Spalt abblasen kann. Dabei sucht sich der Innendruck offenbar immer den schwächsten Umfangsbereich am Deckel bzw. an der Stützscheibe. Auf jeden Fall findet ein sehr undefiniertes Öffnen statt, weil sowohl bei einem Deckel in dessen Umfangsbereich als auch bei mehreren vorhandenen Deckeln (Erhitzen mehreren Probenbehälter zugleich) aufgrund unterschiedlicher Biegefestigkeit des Deckels oder der Deckel das Abblasen bei ungleichen Innendrücken erfolgt. Dies ist unerwünscht, weil bei unkontrolliert unterschiedlichen Innendrücken unterschiedliche Aufschlußreaktionen stattfinden können und deshalb das Aufschlußergebnis bzw. die Analyse verfälscht wird. Außerdem besteht bei dieser bekannten Ausgestaltung die Gefahr, daß die Stützscheibe aus Aluminium entweder beim Anziehen der Andruckschraube oder durch den Innendruck bleibend verformt wird, wodurch die Funktion des Probenbehälters durch zu frühes Öffnen beeinträchtigt oder der Probenbehälter unbrauchbar wird. Ein weiterer Nachteil besteht darin, daß sich diese bekannte Ausgestaltung nicht zur Erwärmung in einem Mikrowellenofen eignet.

Der Erfindung liegt die Aufgabe zugrunde, einen Probenbehälter der eingangs angegebenen Art so auszugestalten, daß er nach einer bei Überschreitung eines vorbestimmten Innendrucks selbsttätig stattgefundenen Öffnung mit einer leicht beherrschbaren und bestimmbaren Schließfunktion wieder schließt.

Diese Aufgabe wird durch die Merkmale des Anspruchs 1 gelöst. Vorteilhafte Weiterbildungen der Erfindung sind in den Unteransprüchen beschrieben.

Bei dem erfindungsgemäßen Probenbehälter ist ein durch den Deckel als Ventilkörper gebildetes Ventil vorgesehen, dessen Öffnungs- und Schließfunktion durch das tellerfederförmige Druckstück bestimmt ist. Aufgrund dieser Ausgestaltung wird das Druckstück hauptsächlich auf Biegung und nicht auf Kompression beansprucht. Hierdurch lassen sich sowohl für ein Druckstück eines Probenbehälters als auch für mehrere Druckstücke mehrerer Probenbehälter im wesentlichen einheitliche Kennwerte der Elastizität erreichen, so daß die vom Druckstück ausgeübte Belastung auf das Ventil leichter beherrscht und bestimmt werden kann. Es ist somit auf einfachere Weise möglich, Druckstücke mit im wesentlichen einheitlichen Elastizitäts-Kennwerten herzustellen.

Ein weiterer Vorteil des erfindungsgemäßen Probenbehälters besteht darin, daß sich auf einfachere Weise zum einen eine kleine Querschnittsgröße für das Druckstück und zum anderen größere Federkräfte sowie außerdem ein größerer Federweg des Druckstücks erreichen läßt. Letzteres ist aus Handhabungsgründen von Bedeutung und zwar beim Anziehen der Andruckschraube des Halters gegen den Deckel. Wenn ein größerer Federweg zur Verfügung steht, sind jeweils erzielte Andruckunterschiede von geringerem Einfluß auf den Öffnungsdruck, weil sich geringere Schließkraftunterschiede erreichen lassen. Größere Schließkraftunterschiede würden zu unterschiedlichen Öffnungsdrücken führen, was unerwünscht ist. Besonders vorteilhaft ist eine Federwirkung des Druckstücks mit einer Federkennlinie ohne Steigung. Eine solche Federwirkung ist mit einem Gewicht vergleichbar, das unabhängig vom zurückgelegten Weg immer eine gleich große Kraft ausübt. Bei einer solchen Ausgestaltung braucht die Bedienungsperson nicht darauf zu achten, mit welcher Spannung bzw. mit welchem Drehmoment sie die Andruckschraube gegen den Deckel vorspannt. Selbst dann, wenn die Andruckschraube etwas weiter eingeschraubt werden sollte als erforderlich, führt dies aufgrund der nicht ansteigenden Federkennlinie zu keiner Schließkraftvergrößerung. Folglich übt das Druckstück unabhängig von seiner von der Andruckschraube ausgeübten Vorspannung immer eine im wesentlichen gleiche Schließkraft aus, so daß das jeweilige Ventil bei immer gleichem Öffnungsdruck öffnen wird. Bleibende Verformungen des Druckstücks werden vermieden, und es wird eine lange Standzeit erreicht.

Bei dem erfindungsgemäßen Probenbehälter nach Anspruch 7 ist das Ventil aufgrund des formstabilen Zwischenteils stabilisiert. Dabei ist der Hersteller hinsichtlich der Werkstoffwahl für den Deckel freigestellt, so daß er hierfür auch einen weicheren und/oder hitzeunbeständigeren oder chemisch inerten und weniger formbeständigen Werkstoff wählen kann. Als Werkstoff für den Deckel eignet sich insbesondere ein PTFE-Derivat bzw. Teflon, das insbesondere bei höherer Temperatur verhältnismäßig weich ist. Die ist unerheblich, weil die Formstabilität des Zwischenteils die Formstabilität des Deckels ersetzt. Die Formstabilität bleibt somit erhalten, wobei die Elastizität des Druckstücks im wesentlichen unverfälscht zur Auswirkung kommt, so daß auch aus diesem Grunde das Ventil bei einem bestimmten und vorzugsweise jeweils immer gleichen Öffnungsdruck gezielt öffnen wird.

Das Druckstück besteht vorzugsweise aus einem harten bzw. zähelastischen Kunstoff, insbesondere HTC (high temperature compound)-Kunststoff

In den Unteransprüchen sind vorteilhafte Ausgestaltungsmerkmale enthalten, die zur vorliegenden Problemlösung beitragen, von einfacher und kostengünstig herstellbarer und kleiner Bauweise sind und außerdem unterschiedliche Öffnungsdrucke von jeweilig bestimmter Größe ermöglichen, falls dies erwünscht ist.

Nachfolgend wird die Erfindung anhand von bevorzugten Ausführungsbeispielen und einer Zeichnung näher erläutert. Es zeigt:

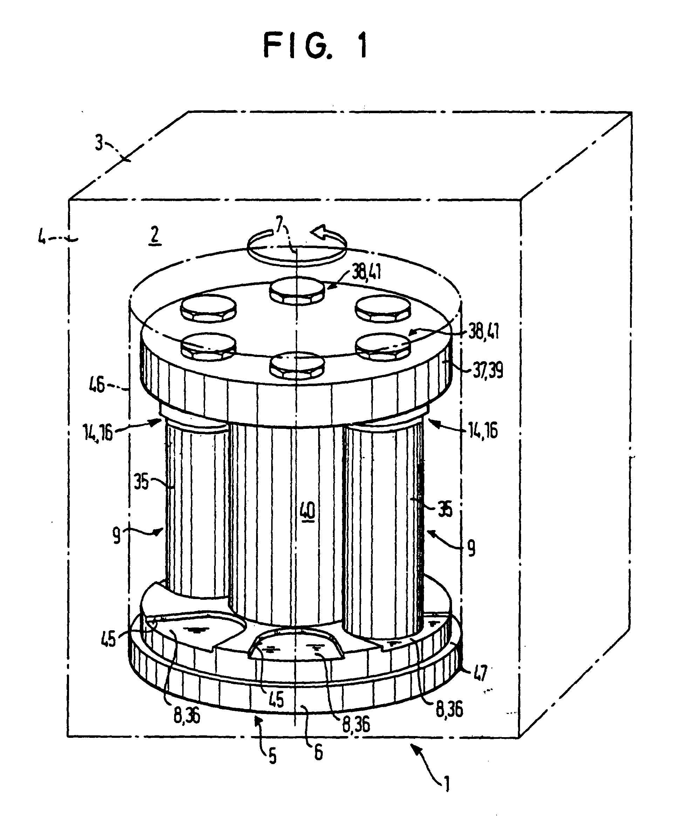

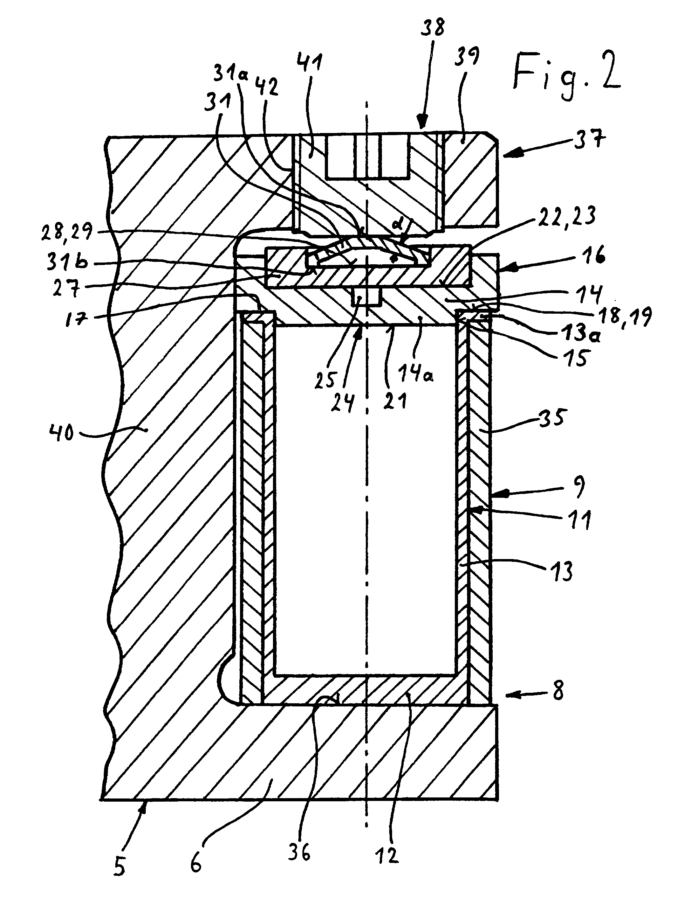

Fig. 1 ein vereinfacht dargestelltes Heizgerät mit einem Tragteil für Probenbehälter zum Aufschließen bzw. Analysieren von Probenmaterial in perspektivischer Darstellung;
Fig. 2 einen radialen vertikalen Teilschnitt durch das Tragteil im Bereich eines Standplatzes für einen Probenbehälter in vergrößerter Darstellung;
Fig. 3 und 4 jeweils einen der Fig.2 entsprechenden Teilschnitt mit einem Probenbehälter in abgewandelter Ausgestaltung

Das Heizgerät 1 ist ein Mikrowellenofen mit einem einen Heizraum 2 umschließenden Gehäuse 3 mit einer Tür 4 an seiner Frontseite. Im Bodenbereich des Heizraums 2 ist das Tragteil 5, vorzugsweise in Form einer runden Scheibe 6, um eine vertikale Drehachse 7 drehbar. Auf dem Tragteil 5 sind vorzugsweise auf einem Teilkreis gleichmäßig verteilte Stell- bzw. Standplätze 8 vorhanden, auf denen jeweils ein Probenbehälter 9 aufstellbar ist. Beim vorliegenden Ausführungsbeispiel sind sechs Standplätze 8 für sechs Probenbehälter 9 vorgesehen, von denen zwei einander gegenüberliegend sichtbardargestellt sind.

Die Probenbehälter 9 sind vorzugsweise untereinander gleich ausgestaltet und bestehen jeweils aus einem im horizontalen Querschnitt runden topfförmigen Gehäuse 11 mit einem horizontalen Gehäuseboden 12 und einer zylindrischen, sich vertikal erstreckenden Gehäusewand 13 mit einem Randflansch 13a. Die durch einen runden Deckel 14 verschließbare Gehäuseöffnung 15 wird durch den oberen Innenrand der Gehäusewand 13 begrenzt.

Dem Probenbehälter 9 ist in seinem oberen Bereich ein Ventil 16 zugeordnet, das bei Überschreitung eines bestimmten Innendrucks im Probenbehälter 9, der beim Aufschließen eines darin befindlichen Probenmaterials unter Wärmeeinwirkung steht, automatisch öffnet, so daß der Innendruck nach außen entweichen und sich abbauen kann. Hierdurch wird verhindert, daß der Innendruck einen vorbestimmten Wert übersteigt und der Probenbehälter 9 überbelastet wird, bzw. explodiert. Das Ventilglied des Ventils 16 ist der Deckel 14 selbst.

Der Ventilsitz 17 des Ventils 16 ist am oberen Rand der zylindrischen Gehäusewand 13 ausgebildet und wird durch die obere konzentrische, radiale ringförmige Randfläche 18 der zylindrischen Gehäusewand 13 und deren Randflansch 13a gebildet. Eine entsprechend geformte radiale, ringförmige Dichtfläche 19 weist der Deckel 14 unterseitig an seinem äußeren Umfangsrand auf. Der Durchmesser des scheibenförmigen Deckels 14 entspricht in etwa dem Außendurchmesser des Gehäuses 11, wobei er geringfügig größer bemessen sein kann. Der Deckel 14 weist außerdem einen unterseitigen, in das Gehäuse 11 einfassenden Zentrieransatz 14a auf, dessen horizontale Unterfläche mit 21 bezeichnet ist. An der Oberseite des Deckels 14 befindet sich konzentrisch eine runde Ausnehmung 22 mit einer radialen und somit ebenen Grundfläche 23. Dem Deckel 14 ist aus Sicherheitsgründen zentral eine Sollbruchstelle 24 zugeordnet, die vorzugsweise durch eine Schwächung des scheibenförmigen Deckels 14 gebildet ist, insbesondere in Form einer Ringrille oder eines zentralen Sacklochs 25, das vorzugsweise oberseitig im Deckel 14 angeordnet sind.

Dem Deckel 14 ist oberseitig ein scheibenförmiges Zwischenteil 27 zugeordnet, das in die Ausnehmung 22 im wesentlichen schließend eingesetzt ist, so daß seine radiale Unterfläche auf der Grundfläche 23 der Ausnehmung 22 aufliegt und seine Umfangsfläche an der hohlzylindrischen Innenwandung der Ausnehmung 22 vorzugsweise ebenfalls anliegt. Das runde Zwischenteil 27 weist einen Durchmesser auf, der die Innenkante der Randfläche 18 überragt und in etwa dem Außendurchmesser der Gehäusewand 13 oder des Randflansches 13a entsprechen kann. 11 entspricht, es kann im Durchmesser jedoch auch größer Bemessen sein als das Gehäuse 11. An der Oberseite des Zwischenteils 27 befindet sich konzentrisch eine runde Ausnehmung 28, miteinerradialen und somit ebenen Grundfläche 29.

Jedem Probenbehälter 9 ist ein scheibenförmiges, elastisches Druckstück 31 zugeordnet, das für den Funktionsbetrieb des Probenbehälters 9 auf den Deckel 14 in die Ausnehmung 28 eingesetzt wird. Aufgrund seiner Elastizität vermag das Druckstück 31 eine definierte Vorspannung für das Ventil 16 zu erzeugen. Das Druckstück 31 befindet sich außerhalb des Probenbehälters 9 und somit im kalten, luftumspülten Bereich.

Bei dem Druckstück 31 kann es sich um eine Scheibe aus elastischem Vollmaterial oder um einen tellerfederförmigen Körper wie einen insbesondere kuppelförmigen Hohlkörper und vorzugsweise um eine ringförmige oder geschlossene Tellerfeder handeln. Bei der Ausgestaltung gem. Fig. 2 bis 4 ist der tellerfederförmige Köper in nach unten divergenter Position angeordnet, wobei sein Außenumfangsrand mit Bewegungsspiel in der Ausnehmung 28 sitzt oder darin ein Umfangsspiel haben kann.

Die Tellerfeder 31 ist mit einer radialen ebenen Kopffläche 31a kegelstumpfförmig geformt. Vorzugsweise ist auch der untere Rand mit einer radialen Fußringfläche 31b versehen. Die Spitze des Hohlraums der Tellerfeder 31 kann spitz zulaufen oder abgeflacht sein. Die Wandung der Flanken ist vorzugsweise gleich dick, siehe Dicke d. Die Tellerfeder 31 kann ein mittiges Loch aufweisen und somit ringförmig sein oder ein geschlossenes Bauteil sein. Die Tellerfeder 31 weist einen Federweg von bis zu etwa 2 bis 3 mm auf, auf dem ihre Vorspannkraft im wesentlichen gleich ist bzw. bleibt.

Der Probenbehälter 9 besteht aus einem mikrowellentransparenten und chemisch inerten Material, insbesondere Kunststoff. Für das Gehäuse 11 und den Deckel 14 eignet sich ein temperaturbeständiger Kunststoff, vorzugsweise ein Polytetrafluoräthylen-Derivat, das insbesondere bei höheren Temperaturen verhältnismäßig weich ist (PTFE,Teflon,TFA,PFA). Das Druckstück 31 besteht aus einem harten bzw. zähelastischen Kunststoff, vorzugsweise einem HTC (high temperature compound)-Kunststoff, wie Polyetermid (PEI) oder Polyeter-Ether-Keton (PEEK). Es kann auch aus einem Elastomermaterial wie z.B. Silicon und Viton bestehen. Das Zwischenteil 27 besteht aus einem harten Kunststoff, der dem Zwischenteil 27 eine große Festigkeit gegen Verformung und Biegung, insbesondere bei unterschiedlichen Temperaturen und somit eine große Druckstabilität verleit. Die Druckstabilität bzw. Biegefestigkeit des Zwischenteils 27 ist größer als die Druckstabilität der Tellerfeder. Dies gilt auch für ein scheibenförmiges Druckstück aus elastischem Vollmaterial.

Vorzugsweise ist das topfförmige Gehäuse 11 von einem die zylindrische Gehäusewand 13 vorzugsweise über ihre gesamte Höhe umgebenden, durch ein Rohrstück gebildeten Schutzmantel 35 umgeben, mit dem sie vorzugsweise fest verbunden ist, z.B. durch Pressitz oder Kleben. Der Schutzmantel besteht vorzugsweise aus hochreißfestem Kunststoff, wie Polyetermid (PEI), Polyether-Ether-Keton (PEEK), z.B. aus dem gleichen vorbeschriebenen Material, aus dem die Tellerfeder 31 besteht. Der Schutzmantel 35 kann ein Loch aufweisen, durch das hindurch mittels eines Temperaturfühlers die Temperatur an der Außenfläche des Gehäuses 11 gemessen werden kann zwecks Steuerung des Drehantriebs des Tragteils 5, der Heizenergie und/oder der Heizzeit des Mikrowellenofens.

Das Tragteil 5 weist für jeden Probenbehälter 9 ein Stützteil auf, das in der auf bzw. in das Tragteil 5 eingestellten Posititon der Probenbehälter 9 das Druckstück 31 des zugehörigen Probenbehälters 9 übergreift, wobei der Probenbehälter mit einer solchen Spannkraft zwischen dem Stützteil und der Standfläche 36 auf dem Tragteil 5 eingespannt ist, das bei Überschreitung eines bestimmten Innendrucks im Probenbehälter 9 der Deckel 14 entgegen der Spannkraft des Druckstücks 31 abhebt und somit das Ventil 16 öffnet. Vorzugsweise ist dem allgemein mit 37 bezeichneten Stützteil koaxial zu jedem Standplatz 8 jeweils eine Spannvorrichtung 38 zugeordnet, mit der die Vorspannkraft des Ventils 16 herbeigeführt werden kann, die durch die Spannkraft des elastischen Druckstücks 31 vorgegeben ist.

Beim vorliegenden Ausführungsbeispiel ist das Stützteil 37 ein vorzugsweiser runder oberer Flansch bzw. Scheibe 39 des Tragteils 5, der durch einen vertikalen Schaft 40 mit der unteren Scheibe 6 verbunden ist, zum Beispiel einstückig oder durch Schrauben (nicht dargestellt). Koaxial über jedem Standplatz 8 ist eine Stellschraube 41 mit einem Außengewinde in ein entsprechendes vertikales Gewindeloch 42 in der oberen Scheiben 39 eingeschraubt. Das untere Ende der Stellschraube 41 ragt von der Unterfläche der oberen Scheibe 39 geringfügig nach unten vor. An seinem oberen Ende weist die Stellschraube 41 ein Werkzeugangriffselement auf, zum Beispiel einen Innen- oder Außen-Sechskant.

In der Betriebstellung befindet sich die Stellschraube 41 koaxial über dem Deckel 14 und über dem Druckstück 31. Durch Anziehen der Stellschraube 41 werden das Druckstück 31 und der Deckel 14 nach unten gegen das Gehäuse 11 gedrückt, wodurch ein bestimmter Andruck erreicht wird. Die Anordnung kann so getroffen sein, daß in der angezogenen Stellung die Stellschraube 41 gegen einen Anschlag eingeschraubt ist, was dadurch erreicht werden kann, daß ein Schraubkopf gegen die obere Scheibe 39 geschraubt wird.

Zur Einstellung wahlweiser Vorspannkräfte bzw. Öffnungsdrücke für das Ventil 16 können für jeden Probenbehälter 9 in entsprechender Anzahl mehrere Druckstücke 31 vorgesehen, deren Elastizität bzw. Spannkraft entsprechend unterschiedlich und an den jeweils erwünschten Öffnungsdruck angepaßt ist.

Um jedem Probenbehälter 9 eine definierte Position im Tragteil 5 zu geben, ist an jedem Standplatz 8 eine Ausnehmung 45 angeordnet, die vorzugsweise radial nach außen offen ist, so daß der zugehörige Probenbehälter 9 von der Seite her bequem eingeschoben werden kann. Die Ausnehmung 45 ist wenigstens im inneren Bereich so geformt, bzw. an die Querschnittsform des Probenbehälters 9 angepaßt, daß dieser in der richtigen Position zentriert ist.

Das Tragteil 5 ist durch einen nicht dargestellten Antrieb um die Drehachse 7 drehbar, so daß die Probenbehälter 9 bei ihrer Beheizung gleichmäßig erwärmt werden.

Für den Fall, daß eine Verunreinigung des Heizraums 2 des Heizgerätes 1 verhindert werden soll ist dem Tragteil 5 ein andeutungsweise dargestelltes Schutzgehäuse 46 zugeordnet, das vorzugsweise von oben über das Tragteil 5 stülpbar ist. Vorzugsweise ist an der Umfangswand der unteren Scheibe 6 eine sich nach oben verjüngende Stufe 47 mit einem Aufsetzrand vorhanden, auf die das gegebenenfalls glockenförmige Schutzgehäuse 46 aufgesetzt werden kann. Das Schutzgehäuse 46 besteht vorzugsweise aus durchsichtigem Material wie Glas oder Kunststoff, so daß die Probenbehälter 9 und gegebenenfalls deren Reaktion bei Erhitzung von außen sichtbar sind.

Die Ausgestaltung des Tragteils 5 beziehungsweise der Scheiben 6 und/oder 39 kann aus Sicherheitsgründen auch so getroffen sein, daß das jeweilige Stützteil beziehungsweise wenigstens eine der beiden Scheiben 6,39 unter dem vom zugehörigen Probenbehälter 9 in dessen Betrieb nach oben wirksamen Öffnungsdruck geringfügig elastisch ausbiegt oder elastisch nachgeben kann. Hierdurch erfüllen diese Teile eine sekundäre Öffnungsfunktion für das Ventil 16, so daß beim Überschreiten eines über normal erhöhten Innendrucks die Öffnung des Ventils 16 sicher erfolgt.

Das Tragteil 5 beziehungsweise die Scheiben 6,39 bestehen auch aus Kunststoff. Die vorbeschriebene zusätzliche Öffnungsfunktion wird dadurch begünstigt, daß die Reaktion zur Wärme sich auf die Flansche 6,39 überträgt und deren Kunststoffmaterial dadurch erweicht und die Festigkeit verringert, so daß die eine oder andere Scheibe 6,39 ausbiegen kann. Vorzugsweise ist die Temperaturbeständigkeit dieses Kunststoffs geringer als die des Schutzmantels 35 und/oder des Druckstücks 31, so daß dieser Kunststoff eher schmilzt. Um eine vorzeitige Verformung der Scheibe 6 zu vermeiden, ist zwecks Wärmedämmung der Boden 12 des Gehäuses 11 dicker als seine Wandung 13.
Die Stellschraube 41 besteht vorzugsweise ebenfalls aus Kunststoff und zwar aus einem harten Kunststoff, um zu vermeiden, daß die Tellerfeder sich in die Stellschraube 41 eindrückt.
Wenn beim Aufschließen des Probenmaterials die Reaktionstemperatur im Probenbehälter steigt, nimmt zunächst der Deckel-Andruck zu, weil der Behälterkunststoff sich ausdehnt. Wenn der Innendruck eine von innen auf den Deckel 14 gerichtete Kraft erzeugt, die die Spannkraft des Druckstücks 31 übersteigt, dann ist der Öffnungsdruck erreicht und der Deckel 14 hebt sich geringfügig parallel ab, wobei der Innendruck zwischen den Flächen 18,19 des Probenbehälters 9 entweicht.

Bei der Ausgestaltung gemäß Fig. 3, bei der gleiche Teile mit gleichen Bezugszeichen versehen sind, ist als zusätzliches Bauteil ein vorzugsweise aus Quarz bestehender Innenbehälter 51 vorgesehen, der mit Bewegungsspiel in das Gehäuse 11 von oben einsetzbar ist und an seinem Rand einen Flanschansatz 52 aufweist, mit dem er in seiner eingesetzten Position auf der Randfläche 18 des Gehäuses 11 aufliegt. Bei dieser Ausgestaltung weist der Deckel 14 eine den Rand bzw. Flanschansatz 52 des Innenbehälters 51 aufnehmende Ringnut 53 auf, so daß aufgrund eines in den Innenbehälter 51 einfassenden Zentrieransatzes des Deckels 14 die Zentrierung aufrechterhalten bleibt und der Deckel 14 weiterhin mit seiner Dichtfläche 19 auf der Randfläche 18 des Gehäuse 11 aufliegt, wodurch die Abdichtung des Probenbehälters 9 gewährleistet ist. Dabei erfüllt die Grundfläche 53a der Ringnut die Funktion einer Dichtfläche für den Innenbehälter, indem sie dicht auf ihm aufliegt. Der Boden des Innenbehälters 51 ist vorzugsweise halbkugelförmig gerundet und somit von durch den Innendruck hervorgerufenen Biegekräften freigestellt. Der Innenbehälter 51 kann somit aus zerbrechlichem Material, insbesondere Quarz, hergestellt werden. Quarz eignet sich deshalb besonders gut, weil es chemisch inert und mikrowellentransparent ist und auch zu einer beträchtlichen Wärmedämmung führt.

Der hohlzylindrische Innenbehälter 51 hat einen geringeren Innendurchmesser als das Gehäuse 11, mit der Folge, daß die wirksame horizontale Innenquerschnittsfläche geringer ist. Infolge dessen ergibt sich bei gleichem Öffnungsdruck eine geringere, auf den Deckel 14 wirkende Öffnungskraft, und das Ventil 16 bzw. der Deckel 14 wird erst bei einem höheren Innendruck und folglich bei einer höheren Reaktionstemperatur öffnen. Der Benutzer kann somit durch die Verwendung des Innenbehälters 51 bei der Verwendung eines gleichen Druckstücks 31 einen höheren Reaktionsdruck und eine höhere Reaktionstemperatur jeweils bestimmter Größe erzielen.

Um insbesondere bei einem Innenbehälter 51 aus zerbrechlichem Material wie Quarz die Belastungsgrenze zu erhöhen, ist es vorteilhaft, im Zwischenraum 54 zwischen dem Boden des Innenbehälters 51 und dem Boden des Gehäuses 11 eine Flüssigkeit, insbesondere Wasser, einzufüllen. Das Wasser wird durch die Mikrowellenstrahlung sowie durch die vom Innenbehälter 51 abgegebene Wärme erhitzt und erzeugt dementsprechend einen Dampfdruck, der bis auf etwa 60 bar steigen kann. Beim vorliegenden Ausführungsbeispiel erzeugt die das Druckstück 31 bildende Tellerfeder eine Schließkraft von etwa 10.000 N, 1000 Kp wobei das Ventil 16 bei einem Innendruck von etwa 110 bar öffnet. Will der Benutzer dagegen mit einem niedrigeren Innendruck von z.B. 60 bar und einer entsprechenden niedrigeren Temperatur arbeiten, dann benutzt er den Probenbehälter 9 ohne Innenbehälter 51.

Bei der Ausgestaltung nach Fig.4, bei der gleiche Teile mit gleichen Bezugszeichen versehen sind, ist die durch die Randfläche 18 des Gehäuses 11 und die Dichtfläche 19 des Deckels 14 gebildete Fuge radial nach außen durch einen Schutzring 56 abgedeckt, der die in Umfangsrichtung durchgehende Fuge eng oder mit geringem Bewegungsspiel umschließt. Der Schutzring 56 weist ein radiales Durchgangsloch 57 auf, dessen Mittelachse sich in etwa in Höhe der Fuge befindet. Es können auch mehrere Löcher 57 vorgesehen sein, die auf dem Umfang verteilt angeordnet sind. Bei der Ausgestaltung gem. Fig.4 ist der Schutzring 56 ein separates Bauteil, das mit Bewegungsspiel von oben über den Deckel 14 und über den Randflansch 13a schiebbar ist, wobei der Schutzring 56 auf der oberen Randfläche des Schutzmantels 35 aufliegt, der im Durchmesser etwas größer bemessen ist, als der Deckel 14 und der Randflansch 13a, die im vorliegenden Fall gleich groß bemessen sind. Der Schutzring 56 besteht ebenfalls aus einem mikrowellentransparenten und chemisch inerten Kunststoff, vorzugsweise aus den gleichem Kunststoff aus dem der Deckel 14 und das Gehäuse 11 bestehen (PTFE-Derivate).

Es ist auch möglich, den Schutzring 56 an seinem oberen Rand mit einem Innenflansch zu versehen, so daß er mit diesem auf der Oberseite des Deckels 14 aufliegt. Bei einer solchen Ausgestaltung bedarf es keiner Auflage des Schutzrings 56 auf dem Schutzmantel 35. Dieser kann in diesem Falle deshalb kleiner bzw. dünner bemessen werden. Es ist im Rahmen der Erfindung auch möglich, den Schutzring 56 am äußeren Rand des Randflansches 13a des Gehäuses 11 oder am oberen Rand des Schutzmantels 35 einstückig anzuformen, wobei er von diesen Teilen nach oben ragt. Ferner ist es möglich, den Schutzring 56 am Umfang des Deckels 14 anzuformen, so daß er von diesem nach unten ragt.

## Patentansprüche

1. Probenbehälter (9) zum Aufschließen bzw. Analysieren von Probenmaterial durch Erhitzung des Probenmaterials in einem Mikrowellenofen mit folgenden Merkmalen :
a) einem Aufnahmeteil (11) mit einer Aufnahmeöffnung (15) für das Probenmaterial,
b) einem Deckel (14) zum Verschließen des Aufnahmeteils (11),
c) das Aufnahmeteil (11) und der Deckel (14) bestehen aus mikrowellentransparentem Kunststoff,
gekennzeichnet durch folgende Merkmale:
d) der Randbereich der Aufnahmeöffnung (15) des Aufnahmeteils (11) bildet einen Ventilsitz und der Deckel (14) bildet ein darauf aufliegendes Ventilglied,
e) der Deckel (14) ist entgegen seiner Schließrichtung an einem tellerfederförmig geformten elastischen Druckstück (31) abgestützt und
f) das Druckstück (31) besteht aus mikrowellentransparentem Kunststoff.

2. Probenbehälter nach Anspruch 1,
**dadurch gekennzeichnet,**
daß der Ventilsitz durch die obere Randfläche (18) der Aufnahmeöffnung gebildet ist.

3. Probenbehälter nach einem der vorhergehenden Ansprüche,
**dadurch gekennzeichnet,**
daß das Ventilglied eine flache Scheibe ist.

4. Probenbehälter nach einem der vorhergehenden Ansprüche,
**dadurch gekennzeichnet,**
daß das Ventilglied eine größere Formstabilität aufweist, als die Formstabilität des Druckstücks (31).

5. Probenbehälter nach einem der vorhergehenden Ansprüche,
**dadurch gekennzeichnet,**
daß zwischen dem Ventilglied und dem Druckstück (31) ein insbesondere scheibenförmiges Zwischenteil (27) angeordnet ist, dessen Formstabilität größer ist, als die Formstabilität des Druckstücks (31).

6. Probenbehälter nach Anspruch 5,
**dadurch gekennzeichnet,**
daß die Formstabilität des Ventilglieds kleiner ist als die Formstablität des Zwischenteils (27).

7. Probenbehälter nach einem der vorhergehenden Ansprüche,
**dadurch gekennzeichnet,**
daß das tellerfederförmige Druckstück (31) ein ringförmig offenes oder geschlossenes Bauteil ist.

8. Probenbehälter nach einem der vorhergehenden Ansprüche,
**dadurch gekennzeichnet,**
daß die Tellerfederform zum Deckel (14) hin divergiert.

9. Probenbehälter nach einem der vorhergehenden Ansprüche,
**dadurch gekennzeichnet,**
daß das tellerfederförmige Druckstück eine radiale Kopffläche (31a) und vorzugsweise an seinem Außenrand eine radiale Fußringfläche (31b) aufweist.

10. Probenbehälter nach einem der vorhergehenden Ansprüche 5 bis 9,
**dadurch gekennzeichnet,**
daß das Zwischenteil (27) aus mikrowellen-transparentem und chemisch inertem Material, vorzugsweise aus Kunststoff besteht.

11. Probenbehälter nach einem der vorhergehenden Ansprüche,
**dadurch gekennzeichnet,**
daß im Ventilglied (14) vorzugsweise zentral eine Sollbruchstelle (24) angeordnet ist.

12. Probenbehälter, insbesondere nach einem oder mehreren der vorhergehenden Ansprüche,
**dadurch gekennzeichnet,**
daß in das Aufnahmeteil (11) ein Innenbehälter (51), insbesondere aus mikrowellentransparentem und chemisch inertem Material, mit geringem Bewegungsspiel einsetzbar ist, der sich mit seinem freien Rand aufwärts bis zum Deckel (14) erstreckt.

13. Probenbehälter nach Anspruch 12
**dadurch gekennzeichnet,**
daß der Innenbehälter (51) an seinem freien Rand einen nach außen vorspringenden Flanschansatz (52) aufweist, mit dem er an einer Schulter, insbesondere auf der Randfläche (18) des Aufnahmeteils (11) aufliegt, und vorzugsweise in der Unterseite des Deckels (14) oder in der Randfläche (18) eine Ausnehmung (53) zur Aufnahme des Flanschansatzes (52) vorgesehen ist.

14. Probenbehälter nach einem der vorhergehenden Ansprüche,
**dadurch gekennzeichnet,**
daß der Boden des Innenbehälters (51) halbkugelförmig gerundet ist.

15. Probenbehälter, insbesondere nach einem der vorhergehenden Ansprüche,
**dadurch gekennzeichnet,**
daß die Ventilflächen zwischen dem Aufnahmeteil (11) und dem Deckel (14) durch die sich vorzugsweise radial erstreckende Randfläche (18) des Aufnahmeteils (11) und eine ihr unterseitig am Deckel (14) gegenüberliegende Ringfläche (19) gebildet sind und die Ventilflächenfuge außen durch einen Schutzring (56) vorzugsweise aus mikrowellentransparentem und chemisch inertem Material, insbesondere Kunststoff, abgedeckt ist, der den Ausgang der Fuge eng oder mit geringem Bewegungsspiel umgibt.

16. Probenbehälter nach Anspruch 15,
**dadurch gekennzeichnet,**
daß der Schutzring (56) in Höhe der Ventilflächenfuge wenigstens ein Loch (57) aufweist.

## Claims

1. Sample holder (9) for the decomposition or analysis of sample material by heating of the sample material in a microwave oven having the following features:
a) a receiving part (11) with a filling opening (15) for the sample material,
b) a lid (14) for closing the receiving part (11),
c) the receiving part (11) and the lid (14) are of microwave transparent plastics,
characterised by the following features:
d) the edge region of the filling opening (15) of the receiving part (11) forms a valve seat and the lid (14) forms a valve member lying thereon,
e) the lid (14) is braced oppositely to its closing direction on an elastic thrust piece (31) formed in plate spring shape and
f) the thrust piece (31) is of microwave transparent plastics.

2. Sample holder according to claim 1,
characterised in that,
the valve seat is formed by the upper edge surface (18) of the filling opening.

3. Sample holder according to any preceding claim,
characterised in that,
the valve member is a flat disk.

4. Sample holder according to any preceding claim,
characterised in that,
the valve member exhibits greater stability of form than the thrust piece (31).

5. Sample holder according to any preceding claim,
characterised in that,
there is arranged between the valve member and the thrust piece (31) an intermediate part (27), in particular disk shaped, the stability of form of which is greater than that of the thrust piece (31).

6. Sample holder according to claim 5,
characterised in that,
the stability of form of the valve member is less than that of the intermediate part (27).

7. Sample holder according to any preceding claim,
characterised in that,
the plate-spring-shape thrust piece (31) is a ring-form, open or closed, component.

8. Sample holder according to any preceding claim,
characterised in that,
the plate-spring shape diverges towards the lid (14).

9. Sample holder according to any preceding claim,
characterised in that,
the plate-spring-shape thrust piece has a radial head surface (31a) and preferably a radial foot ring surface (31b) at its outer edge.

10. Sample holder according to any of preceding claims 5 to 9,
characterised in that,
the intermediate part (27) is of microwave transparent and chemically inert material, preferably of plastics.

11. Sample holder according to any preceding claim,
characterised in that,
a safety breaking point (24) is arranged preferably centrally in the valve member (14).

12. Sample holder, in particular according to one or more of the preceding claims,
characterised in that,
an inner container (51), in particular of microwave transparent and chemically inert material, can be placed in the receiving part (11), with little play for movement, which inner container extends with its free edge upwards to the lid (14).

13. Sample holder according to claim 12,
characterised in that,
the inner container (51) has at its free edge an outwardly projecting flange rim (52) with which the inner container rests on a shoulder in particular on the edge surface (18) of the receiving part (11), and preferably a recess (53) for receiving the flange rim (52) is provided in the underside of the lid (14) or in the edge surface (18).

14. Sample holder according to any preceding claim,
characterised in that,
the floor of the inner container (51) is rounded in the shape of a hemisphere.

15. Sample holder according to any preceding claim,
characterised in that,
the valve surfaces are formed between the receiving part (11) and the lid (14) by the preferably radially extending edge surface (18) of the receiving part (11) and an opposing ring surface (19) on the lid (14) underside, and the join between the valve surfaces is covered outwardly by a protecting ring (56) preferably of microwave transparent and chemically inert material, in particular plastics, which surrounds the join seam closely or with little play for movement.

16. Sample holder according to claim 15,
characterised in that,
the protecting ring (56) has at least one hole (57) at the level of the join between the valve surfaces.

## Revendications

1. Récipient à échantillons (9) pour la décomposition ou l'analyse d'un échantillon par chauffage de l'échantillon dans un four à micro-ondes ayant les caractéristiques suivantes :
(a) une partie logement (11) possédant une ouverture de logement (15) destinée à l'échantillon,
(b) un bouchon (14) destiné à fermer la partie logement (11),
(c) la partie logement (11) et le bouchon (14) sont en une matière plastique transparente aux micro-ondes
caractérisé par les caractéristiques suivantes :
(d) la zone du bord de l'ouverture de logement (15) de la partie logement (Il) forme un siège de soupape et le bouchon (14) forme un élément de soupape superposé,
(e) le bouchon (14) s'appuie contre un élément de pression (31), déformable élastiquement, dans le sens opposé à son sens de fermeture, et
(f) l'élément de pression (31) est en matière plastique transparente aux micro-ondes.

2. Récipient à échantillons selon la revendication 1, caractérisé en ce que le siège de soupape est formé par la surface supérieure (18) du bord de l'ouverture de logement.

3. Récipient à échantillons selon l'une des revendications précédentes, caractérisé en ce que l'élément de soupape est un disque plan.

4. Récipient à échantillons selon l'une des revendications précédentes, caractérisé en ce que l'élément de soupape a une stabilité de forme supérieure à celle de l'élément de pression (31).

5. Récipient à échantillons selon l'une quelconque des revendications précédentes, caractérisé en ce qu'une pièce intermédiaire (27), de préférence en forme de disque, dont la stabilité de forme est supérieure à celle de l'élément de pression (31) est disposée entre l'élément de soupape et l'élément de pression (31).

6. Récipient à échantillons selon la revendication 5, caractérisé en ce que la stabilité de forme de l'élément de soupape est inférieure à celle de la pièce intermédiaire (27).

7. Récipient à échantillons selon l'une des revendications précédentes, caractérisé en ce que l'élément de pression (31) en forme de rondelle-ressort est un élément en forme d'anneau ouvert ou fermé.

8. Récipient à échantillons selon l'une des revendications précédentes, caractérisé en ce que la forme de rondelle-ressort est évasée en direction du bouchon (14).

9. Récipient à échantillons selon l'une des revendications précédentes, caractérisé en ce que l'élément de pression en forme de rondelle-ressort présente une surface supérieure (3 la) radiale et de préférence, sur son bord externe, une surface inférieure annulaire (31b) radiale.

10. Récipient à échantillons selon l'une des revendications précédentes 5 à 9, caractérisé en ce que la pièce intermédiaire (27) est en un matériau transparent aux micro-ondes et chimiquement inerte, de préférence une matière plastique.

11. Récipient à échantillons selon l'une des revendications précédentes, caractérisé en ce que l'élément de soupape (14) comporte un point destiné à la rupture (24), de préférence central.

12. Récipient à échantillons, en particulier selon une ou plusieurs des revendications précédentes, caractérisé en ce qu'un récipient interne (51), en particulier en un matériau transparent aux micro-ondes, et chimiquement inerte, à jeu faible, dont le bord libre s'étend vers le haut jusqu'au bouchon (14), est utilisable dans la partie logement (11).

13. Récipient à échantillons selon la revendication 12, caractérisé en ce que le récipient interne (51) présente, sur son bord libre, une collerette (52) faisant saillie vers l'extérieur, et par laquelle il repose contre un épaulement, en particulier sur la surface (18) du bord de la partie logement (11) et qu'il est prévu un évidement (53) pour loger la collerette (52) de préférence dans la face inférieure du bouchon (14) ou dans la surface (18) du bord.

14. Récipient à échantillons selon l'une des revendications précédentes, caractérisé en ce que le fond du récipient interne (51) est arrondi en une forme hémisphérique.

15. Récipient à échantillons, en particulier selon une des revendications précédentes, caractérisé en ce que les surfaces de soupape entre la partie logement (11) et le bouchon (14) sont formées par la surface (18) du bord de la partie logement (11) qui s'étend de préférence radialement et une surface annulaire (19) qui lui est opposée contre la face inférieure du bouchon (14), et que le joint de soupape est recouvert, à l'extérieur, par un anneau de protection (56) de préférence en un matériau transparent aux micro-ondes et chimiquement inerte, en particulier une matière plastique, et qui enserre étroitement ou avec un jeu faible la sortie du joint.

16. Récipient à échantillons selon la revendication 15, caractérisé en ce que l'anneau de protection (56) présente au moins un trou (57) à la hauteur du joint de soupape.
